# EUROPEAN PATENT APPLICATION

(11) **EP 4 768 789 A1**
(43) Date of publication of application: **01.07.2026**
(21) Application number: 25219387.5
(22) Date of filing: 28.11.2025
(51) Int. Cl.: F24C 7/08, F24C 15/02, H04N 23/74, F24C 15/00

(54) **COOKING APPLIANCE AND METHOD IN WHICH CAMERA SETTING VALUE IS CONTROLLED DEPENDING ON OPEN STATE OF DOOR**

(30) Priority: 30.12.2024 KR 20240200640
(71) Applicant: LG Electronics Inc., Yeongdeungpo-gu Seoul 07336 (KR)
(72) Inventor: LEE, Hyungoo, 07796 Seoul (KR)
(74) Representative: Schott, Jakob Valentin

(57) **Abstract**

The present invention relates to a cooking appliance and a control method for controlling a camera setting value depending on the open state of a door, and the cooking appliance cooking a food ingredient according to an embodiment of the present invention includes a cooking module heating the food ingredient; a door opening or closing one side of the cooking module; a camera disposed in the door and capturing the food ingredient placed in the cooking module; a door sensor sensing the opening or closing of the door; and an appliance controller controlling an auto exposure (AE) value, which is a parameter for setting an automatic exposure of the camera, and an auto white balance (AWB) value, which is a parameter for setting an automatic white balance of the camera, depending on an open state or close state of the door sensed by the door sensor.

## Description

### BACKGROUND

### Field

The present invention relates to a cooking appliance and a method in which a camera setting value is controlled depending on the open state of a door.

### Description of Related Art

An oven is an apparatus that provides a function for cooking various types of food, and a user can cook various food ingredients via the oven. The cooking material placed within the oven changes in shape or color as the cooking proceeds.

So, a camera may be disposed in the oven to observe the cooking material therein. However, since the angle at which the cooking material is captured varies depending on the position of the camera inside the oven, it is necessary to dispose the camera at a position suitable for capturing the cooking material. Further, there is a need for addressing an issue that, in capturing the cooking material, the operation time of the camera inside the oven becomes slower due to external light.

Accordingly, in this specification, a method and an apparatus are presented in which a camera is disposed at a position suitable for capturing the cooking material while minimizing the influence on the camera by the external light from outside the oven.

### SUMMARY OF THE DISCLOSURE

The purpose of the present specification is to solve the aforementioned problems, enabling the camera to promptly capture the cooking material by minimizing the influence of external light on the camera disposed in the cooking appliance.

Additionally, the purpose of the present specification is to provide an apparatus and method in which a camera is disposed in the door to capture the food ingredient inside the cooking chamber, while enabling the camera to quickly adapt to changes in light caused by the opening and closing of the door.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

A cooking appliance cooking a food ingredient according to an embodiment of the present invention includes a cooking module heating the food ingredient; a door opening or closing one side of the cooking module; a camera disposed in the door and capturing the food ingredient placed in the cooking module; a door sensor sensing the opening or closing of the door; and an appliance controller controlling an auto exposure (AE) value, which is a parameter for setting an automatic exposure of the camera, and an auto white balance (AWB) value, which is a parameter for setting an automatic white balance of the camera, depending on an open state or close state of the door sensed by the door sensor.

A method for controlling a camera setting value depending on an open state of a door according to another embodiment of the present invention includes a step in which a door sensor of a cooking appliance senses an open state or close state of a door; and
a step in which the appliance controller controls an auto exposure (AE) value, which is a parameter for setting an automatic exposure of a camera of the cooking appliance, and an auto white balance (AWB) value, which is a parameter for setting an automatic white balance of the camera, using a result of the sensing by the door sensor.

In the case where the present invention is applied, it is possible to enable the camera to promptly capture the cooking material by minimizing the influence of external light on the camera disposed in the cooking appliance.

Additionally, in the case where the present invention is applied, a camera is disposed in the door to capture the food ingredient inside the cooking chamber, while being able to quickly adapt to changes in light caused by the opening and closing of the door.

The effects of the present invention are not limited to the aforementioned effects, and various effects of the present invention can be readily derived from the configuration of the present invention.

### BRIEF DESCRIPTION OF DRAWINGS

The above and other objects, features, and advantages of the present disclosure will become more apparent to those of ordinary skill in the art by describing example embodiments thereof in detail with reference to the attached drawings, which are briefly described below.
FIG. 1 is a diagram showing the configuration of a cooking appliance according to an embodiment of the present invention.
FIGS. 2 and 3 are side views showing a cooking chamber of a cooking appliance according to an embodiment of the present invention.
FIG. 4 is a diagram showing the configuration of a cooking appliance according to an embodiment of the present invention.
FIG. 5 is a diagram showing a process in which a cooking appliance controls the AE and AWB functions of a camera according to an embodiment of the present invention.
FIG. 6 is a diagram showing a process in which a cooking appliance controls the AE and AWB functions of a camera according to another embodiment of the present invention.
FIG. 7 is a diagram showing a process in which a cooking appliance controls the AE and AWB functions of a camera according to still another embodiment of the present invention.
FIG. 8 is a diagram showing a process in which a cooking appliance controls the AE and AWB functions of a camera according to an embodiment of the present invention.
FIG. 9 is a diagram showing a process of controlling camera settings according to the door opening/closing time, according to an embodiment of the present invention.
FIG. 10 is a diagram showing a process of controlling camera settings based on whether a tray is moved or not, according to an embodiment of the present invention.
FIG. 11 is a diagram showing the convergence speed to a target value by an automatic exposure function of the camera in a case where an embodiment of the present invention is applied.
FIG. 12 is a diagram showing the convergence speed to a target value by the automatic white balance function of the camera according to an embodiment of the present invention.

### DETAILED DESCRIPTION OF THE EMBODIMENTS

Hereinafter, embodiments of the present invention will be described in detail with reference to the drawings so that those skilled in the art can easily practice the invention. The present invention may be implemented in various different forms, and is not limited to the embodiments described herein.

In order to clearly describe the present invention, parts unrelated to the description have been omitted, and throughout the specification, the same reference signs are used for identical or similar components. Also, some embodiments of the present invention will be described in detail with reference to the illustrative drawings. In adding reference signs to the components of each drawing, the same components, even if shown on different drawings, may possibly have the same signs. Also, in describing the present invention, when it is determined that a detailed description of a related known structure or function may obscure the gist of the present invention, such detailed description may be omitted.

In describing the components of the present invention, terms such as first, second, A, B, (a), (b), and the like may be used. These terms are only intended to distinguish one component from another, and do not limit the nature, order, sequence, or number of the components. When a certain component is described as being "connected", "coupled", or "linked" to another component, it should be understood that although the both components may be directly connected, coupled or linked to each other, a third component may also be "interposed" between the both components, or the both components may be "connected," "coupled," or "linked" to each other through a third component.

Also, in embodying the present invention, for the convenience of explanation, it may be described using broken-down components, but these components may be implemented in a single device or module, or one component may be implemented to be divided in multiple devices or modules.

The features of various embodiments of the present disclosure can be partially or entirely coupled to or combined with each other and can be interlocked and operated in technically various ways, and the embodiments can be carried out independently of or in association with each other. Also, the term "can" used herein includes all meanings and definitions of the term "may."

In the present specification, an embodiment of a cooking appliance includes, by way of example, an oven, which is a home appliance heating and cooking various food ingredients. Examples of the oven include various home appliances such as a lightwave oven, a microwave oven, and an air fryer.

In the present specification, the cooking appliance includes a camera which captures a food ingredient loaded in the cooking appliance. Also, in the present specification, the cooking appliance may optionally include a display outputting an image. In a case where no display is disposed on the cooking appliance, a display of a terminal device interworking with the cooking appliance may output an image.

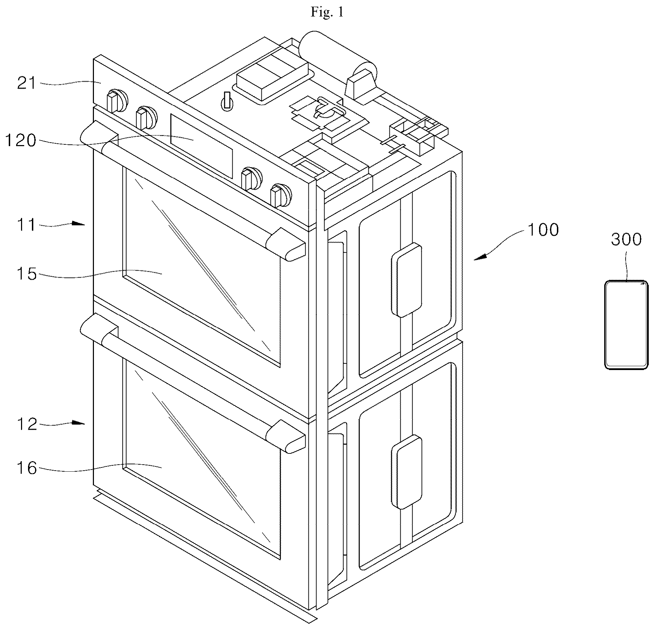

FIG. 1 is a diagram showing the configuration of a cooking appliance according to an embodiment of the present invention. FIG. 1 corresponds to an embodiment, and a cooking appliance according to another embodiment of the present invention may include a shape or components different from that or those in FIG. 1. The cooking appliance 100 is a kind of home appliance which cooks food ingredients.

A main body which heats food ingredients therein includes an operation part 21, doors 11, 12, and cooking chambers 15, 16 that are opened or closed by the doors 11, 12.

On the operation part 21 through which the cooking appliance 100 is operated, a display module 120 is disposed. A user may check a cooking guide through the display module 120. Alternatively, a user terminal 300 interworking with the cooking appliance 100 may provide the function of the display module 120. Depending on its configuration, the cooking appliance 100 may include only one cooking chamber.

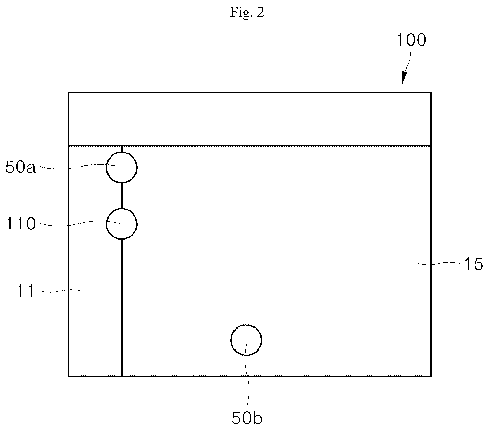

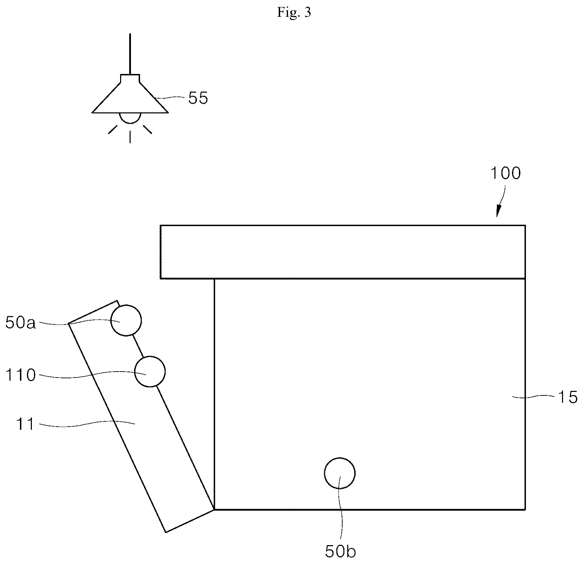

FIGS. 2 and 3 are side views showing a cooking chamber of a cooking appliance according to an embodiment of the present invention. FIG. 2 shows a state in which the door 11 of the cooking appliance is closed, and FIG. 3 shows a state in which the door 11 of the cooking appliance is opened. FIGS. 2 and 3 illustrate a structure in which a camera 110 is disposed in the door 11 of the cooking chamber 15 of the cooking appliance 100. The positions of lighting devices 50a, 50b may be changed.

According to an embodiment of the present invention, when the door 11 is opened, the lighting device 50b disposed on the lower surface of the cooking chamber 15 may be turned on, and the lighting device 50a disposed in the door may be turned off. Also, when the door is closed, in order to capture the inside of the cooking chamber 15, the lighting device 50a disposed in the door may be turned on, and the lighting device 50b disposed on the lower surface of the cooking chamber 15 may be turned off. The interlocking between the door and the on/off operation of the lighting devices may be implemented in various ways depending on the positions and the number of the lights. According to an embodiment of the present invention, the first lighting device 50a may be disposed in the door 11. The second lighting device 50b may be disposed in the lower portion of the cooking chamber 15. The color temperatures of these two lighting devices may be the same as or different from each other. The placement positions or the number of disposed lighting devices may vary depending on the implementation of the cooking appliance 100, and the present invention includes, as embodiments, various positions and numbers of lighting devices within the cooking appliance 100.

The camera 110 disposed on the door 11 may receive external light due to the opening and closing of the door 11. For example, in the state of FIG. 2, the camera 110 is affected by light depending on the on or off states of the two lighting devices 50a, 50b, whereas in the state of FIG. 3, the camera 110 is affected by a lighting device 55 disposed outside the cooking appliance 100 or by natural light. In this case, the camera 110 may perform automatic exposure (AE) adjustment. Also, the camera 110 may perform automatic white balance (AWB) adjustment.

However, when the door 11 is closed again after having been opened, it takes time for the camera 110 to reach a state in which it can capture the inside of the cooking chamber 15, due to the influence of external light. That is, it may take time for the AE and AWB of the camera 110, which has adapted to bright external light, to adapt to the light level of the dark cooking chamber 15, and this may cause a temporal delay in capturing the inside of the cooking chamber 15.

Therefore, there is a need for a method that can reduce the AE/AWB adjustment time of the camera 110 caused by the difference in light amount between the exterior and the cooking chamber 15 due to the opening and closing of the door, so that the camera 110 can quickly capture the inside of the cooking chamber 15.

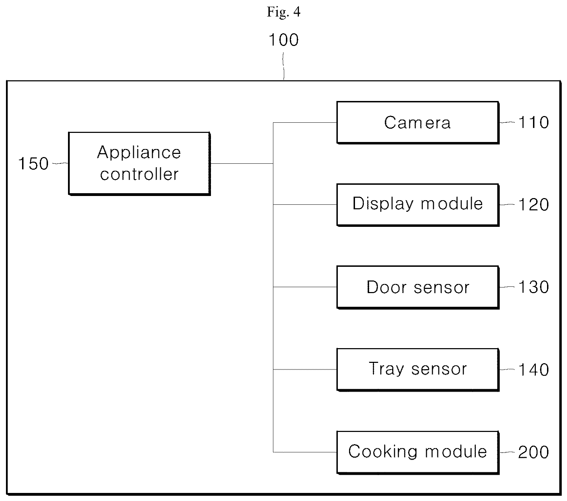

FIG. 4 is a diagram showing the configuration of a cooking appliance according to an embodiment of the present invention. FIG. 4 shows logical components, and these components may be physically integrated into one.

The cooking appliance 100 is a kind of home appliance that cooks food ingredients, and includes a cooking module 200, doors 11, 12, a camera 110, a door sensor 130, and an appliance controller 150. In addition to these, it may further include components necessary for cooking. Reference is made to the configurations of FIGS. 2, 3, and 4.

The cooking module 200 is a component that heats food ingredients. The door 11, 12 opens or closes one side of the cooking module. The cooking module 200 may include one or more cooking chambers 15, 16. And the number of doors may increase or decrease depending on the number of cooking chambers. The camera 110 may capture food ingredients placed in the cooking module, and may be disposed on the door 11, 12.

The door sensor 130 senses the opening and closing of the door 11, 12. The door sensor 130 may be disposed on each door.

The appliance controller 150 controls the AE (Auto Exposure) value, which is a parameter for setting the automatic exposure of the camera 110, and the AWB (Auto White Balance) value, which is a parameter for setting the automatic white balance of the camera 110, according to the open state or close state of the door sensed by the door sensor 130. That is, the appliance controller 150 can control various cooking functions of the cooking appliance 100, and can also set the AE/AWB value of the camera 110 to a specific value according to the opening and closing of the door, thereby reducing time delay in the capturing of the image of the cooking chamber by the camera 110.

The cooking appliance according to the configurations of FIGS. 2 to 4 has a camera installed on a front door. For example, the camera may be installed at the inside area or front side area of door. The camera may be installed at the inner surface of door. Also, a lighting device or the like may be disposed in the front door or in a specific region within the cooking chamber for the capturing of the image therein by the camera. In a case where the camera 110 is disposed in the door as described above, the viewpoint of the user looking at the cooking chamber coincides with the capturing viewpoint of the camera 110. As a result, the quality of the photograph of the cooking chamber captured by the camera 110 is excellent, and the user's line of sight when checking the food ingredients in the cooking chamber coincides with the viewpoint of the image captured by the camera, so that it is possible to improve the accuracy of the capturing of the food ingredients.

That is, in the case of positioning the camera 110 and the lighting device 50a in the front surface of the door, it is possible to capture a clear image. Meanwhile, by allowing the appliance controller 150 to control the AWB/AE of the camera 110 according to the opening and closing of the door, even in the case where a rapid change in the external light environment occurs due to the opening and closing of the door, it is possible to increase the convergence speed of the AWB/AE of the camera 110.

Hereinafter, a process in an embodiment of the present invention will be described in which the AE value or AWB value obtained from the camera 110 in the case where the door is opened is applied to the AE/AWB function after the door is closed.

That is, as an embodiment, the AE value (Curr_AE Value) immediately before or after the opening of the door, and the AWB value (Curr_AWB Value) immediately before or after the opening of the door, are values measured in the process in which the camera performs the AE/AWB function. "Immediately before" or "immediately after" means within a certain period of time before or after the door opens. For example, it could mean a certain period of time (For example, 0.1 seconds before or after) when a door opens. For this purpose, the appliance controller 150 may temporarily store the camera's AE and AWB values at 0.1 second intervals. 0.1seconds. 0.1 seconds is an exemplary value and may be set differently depending on the type or characteristics of the camera.

Hereinafter, a process will be discussed in which, when the door sensor 130 senses the open state or close state of the door, the appliance controller 150 controls the camera 110 of the cooking appliance with the use of the sensing result of the door sensor 130. More specifically, the discussion will be related to embodiments of a process in which the appliance controller 150 controls an AE (Auto Exposure) value, which is a parameter for setting the automatic exposure of the camera 110 disposed in the door side of the cooking appliance, and an AWB (Auto White Balance) value, which is a parameter for setting the automatic white balance of the camera.

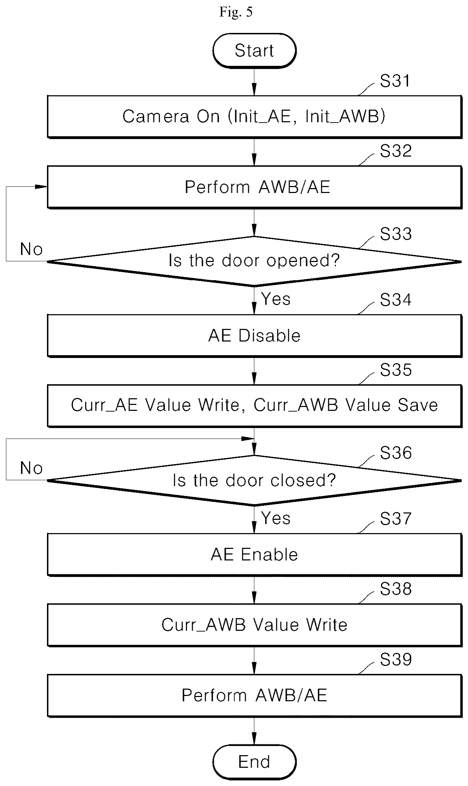

FIG. 5 is a diagram showing a process in which a cooking appliance controls the AE and AWB functions of a camera according to an embodiment of the present invention.

FIG. 5 illustrates a process in which, when the door is opened, the appliance controller 150 stops the AE function of the camera 110, records the AE value of a normal state, and then waits. When the door is closed, the appliance controller 150 may control the camera 110 such that the camera 110 can be quickly converged to a normal brightness by operating the AE function of the camera 110. Additionally, the appliance controller 150 records a normal color temperature value, so that the AWB/AE function of the camera 110 can quickly adapt to the capturing environment inside the cooking chamber.

The embodiment of FIG. 5 illustrates a process in which, when the front door of the oven is opened, the AE operation is stopped, and an oven normal-state brightness (AE) value is written in advance, so that the camera 110 temporarily stops the AE operation and waits. Then, when the front door of the oven is closed, the camera 110 operates AE to be quickly converged to the normal brightness, and writes the normal color temperature (AWB) value of AWB to be quickly converged. This will be described more in detail.

When being turned on, the camera 110 is initialized with the initial values of AE and AWB (Init_AE, Init_AWB) (S31). These initial values may be preset as initial setting values to be set in the camera 110, and may be saved in a specific memory of the camera 110, or the appliance controller 150 may save that value.

Additionally, the initial values of AE and AWB (Init_AE, Init_AWB) may be preset according to the lighting devices 50a, 50b installed within the cooking appliance 100.

After the camera is turned on, the AWB/AE functions are performed (S32). This allows the camera 110 to perform AWB and AE according to the brightness inside the cooking chamber, so that optimal capturing conditions can be achieved. Thereafter, in the case where the door is opened (S33), the appliance controller 150 disables the AE operation of the camera 110 (S34).

This is a state in which, because of the opening of the door, external lighting affects the camera 110, and the opening of the door is a state in which the capturing of the cooking chamber is stopped. Therefore, the appliance controller 150 stops the AE function of the camera 110 to disable unnecessary AE operation. Additionally, the appliance controller 150 sets the AE value (Curr_AE Value) immediately before or after the opening of the door in the camera 110, and saves the AWB value (Curr_AWB Value) immediately before or after the opening of the door in a separate memory (S35).

Then, the appliance controller 150 checks whether the door has been closed (S36). If the door is not closed, the appliance controller 150 continuously monitors whether the door has been closed.

In the case where the door is closed (S36), the appliance controller 150 enables the AE function of the camera 110 (S37). As a result, the camera 110 performs AE based on the Curr_AE set previously at S35.

Meanwhile, the appliance controller 150 sets the Curr_AWB, which has been set at S35, in the camera 110 (S38). As a result, the camera 110 performs AWB based on the Curr_AWB saved previously at S35.

Thereafter, the camera 110 performs AE/AWB based on the Curr_AE and Curr_AWB (S39). Therefore, the camera 110 can quickly reach a state in which it is able to capture the cooking chamber 15 with the use of the AE value (Curr_AE Value) and AWB value (Curr_AWB Value) at the time when the door was opened.

In a case where, after the AE/AWB of the camera 110 has been set to adjust to external lighting after the opening of the door, the AE/AWB of the camera 110 is performed to adjust to the darkened space after the closing of the door, a delay may occur. However, the camera 110 quickly performs AE/AWB with the use of the AE value (Curr_AE Value) and AWB value (Curr_AWB Value) at the time when the door was opened, so that the camera 110 can quickly capture images in a state suitable to the brightness of the cooking chamber.

The embodiment of FIG. 5 may be summarized as follows. When the door sensor 130 senses the opening of the door 11, the appliance controller 150 disables the automatic exposure function of the camera 110 (S33-S34).

Then, when the door sensor 130 senses the closing of the door, the appliance controller 150 sets the first saved value as the AE (Auto Exposure) value, and enables the automatic exposure function of the camera 110 (S37).

Here, in an embodiment, the first saved value may be any one of an average value of AE values measured within the cooking module 200 by the appliance controller 150, an AE value immediately before or after the opening of the door, and a value saved in the appliance controller 150.

For example, the appliance controller 150 may record an average value of the AE values measured within the cooking module 200. The appliance controller 150 may calculate and store an average value of the AE values after a certain period of time has elapsed from the closing of the door of the cooking module 200.

Alternatively, the appliance controller 150 may store the AE value immediately before or after the opening of the door in the process of continuously acquiring AE values.

Alternatively, the appliance controller 150 may store therein a preset value, that is, the AE value of the normal state of the camera 110.

As described above, by the appliance controller 150 setting in the camera 110 the AE value which serves as the starting point when the camera 110 performs the AE function according to the closing of the door, it is possible to reduce the time taken for the camera 110 to change the AE value, which has been changed to adjust to the bright external lighting, to an AE value suitable to the dark cooking chamber after the closing of the door.

Additionally, when the door sensor 130 senses the closing of the door, the appliance controller 150 may set the second saved value as the AWB value of the camera 110.

Here, similarly to the first saved value, the second saved value may be any one of an average value of AWB values measured within the cooking module 200 by the appliance controller 150, an AWB value immediately before or after the opening of the door, and a value saved in the appliance controller 150.

Here, in an embodiment, the second saved value may be any one of an average value of AWB values measured within the cooking module 200 by the appliance controller 150, an AWB value immediately before or after the opening of the door, and a value saved in the appliance controller 150.

For example, the appliance controller 150 may record an average value of the AWB values measured within the cooking module 200. The appliance controller 150 may calculate and store an average value of the ABW values after a certain period of time has elapsed from the closing of the door of the cooking module 200.

Alternatively, the appliance controller 150 may store the AWB value immediately before or after the opening of the door in the process of continuously acquiring AE values.

Alternatively, the appliance controller 150 may store therein a preset value, that is, the AWB value of the normal state of the camera 110.

As described above, by the appliance controller 150 setting in the camera 110 the AWB value which serves as the starting point when the camera 110 performs the AWB function according to the closing of the door, it is possible to reduce the time taken for the camera 110 to change the AWB value, which has been changed to adjust to the bright external lighting, to an AWB value suitable to the dark cooking chamber after the closing of the door.

Although not shown in FIG. 5, the AWB function may also be disabled and enabled at the times when the AE is disabled (S34) and enabled (S37), respectively.

In capturing the inside of the cooking chamber after the door is closed, various embodiments may be applied depending on what values are set as the AE value and AWB value of the camera, or what time point the AE value and AWB value are set.

Hereinafter, embodiments will be discussed in which, when the door sensor 130 senses the closing of the door, the appliance controller 150 sets the first saved value as the AE value and the second saved value as the AWB value.

Here, in an embodiment, the first saved value may be any one of an average value of AE values measured within the cooking module 200 by the appliance controller 150, an AE value immediately before or after the opening of the door, and a value saved in the appliance controller 150.

Here, in an embodiment, the second saved value may be any one of an average value of AWB values measured within the cooking module 200 by the appliance controller 150, an AWB value immediately before or after the opening of the door, and a value saved in the appliance controller 150.

For the first saved value and the second saved value, reference may be made to the description of FIG. 5.

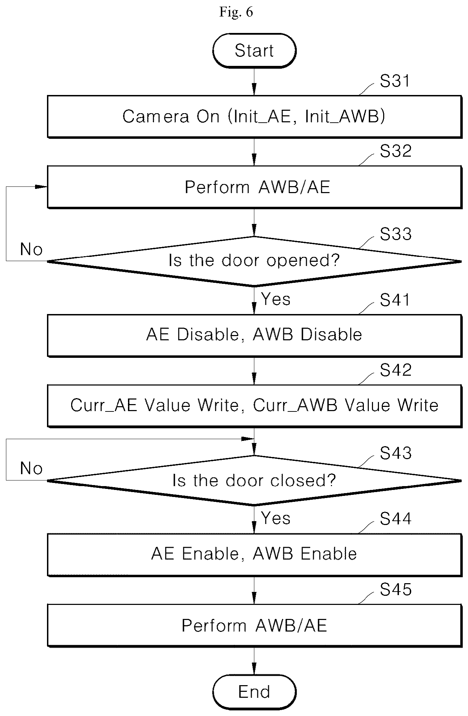

FIG. 6 is a diagram showing a process in which a cooking appliance controls the AE and AWB functions of a camera according to another embodiment of the present invention. Steps S31 to S33 are the same as described above in FIG. 5. The embodiment of FIG. 6 includes an embodiment in which, when the door sensor 130 senses the opening of the door, the appliance controller 150 disables one or more of the automatic exposure function (AE function) and the white balance function (AWB function) of the camera 110.

In the case where the door is opened (S33), the appliance controller 150 disables the AE operation and the AWB operation of the camera 110 (S41). This is a state in which, because of the opening of the door, external lighting affects the camera 110, and the opening of the door is a state in which the capturing of the cooking chamber is stopped. Therefore, the appliance controller 150 stops the AE function and the AWB function of the camera 110 to disable unnecessary AE operation and AWB operation.

Additionally, the appliance controller 150 sets the AE value (Curr_AE Value) and the AWB value (Curr_AWB Value) immediately before or after the opening of the door in the camera 110 (S42).

Afterthat, the appliance controller 150 checks whether the door has been closed (S43). If the door is not closed, the appliance controller 150 continuously monitors whether the door has been closed.

In the case where the door is closed (S43), the appliance controller 150 enables the AE function and the AWB function of the camera 110 (S44). As a result, the camera 110 performs AE and AWB based on the Curr_AE and Curr_AWB set previously at S42 (S45).

That is, since the camera 110 performs AE/AWB based on the Curr_AE and Curr_AWB at the time when the door was opened, it can quickly reach a state in which it is able to capture the cooking chamber 15.

In a case where, after the AE/AWB of the camera 110 has been set to adjust to external lighting after the opening of the door, the AE/AWB of the camera 110 is performed to adjust to the darkened space after the closing of the door, a delay may occur. However, the camera 110 quickly performs AE/AWB with the use of the AE value (Curr_AE Value) and AWB value (Curr_AWB Value) at the time when the door was opened, so that the camera 110 can quickly capture images in a state suitable to the brightness of the cooking chamber.

In the embodiment of FIG. 6, step S42 may be performed immediately before step S44. For example, in the case where the Curr_AE and Curr_AWB are preset values, immediately before enabling the AE/AWB functions of the camera after steps S41 and S43, the appliance controller 150 may set the AE value and AWB value of the camera 110 to specific values, respectively.

To this end, the appliance controller 150 may store the AE value and AWB value of the camera immediately before or after the opening of the door as the first saved value and second saved value, respectively, and then, after step S43 in which the door is closed, set the first saved value as the AE value of the camera 110 and the second saved value as the AWB value of the camera 110.

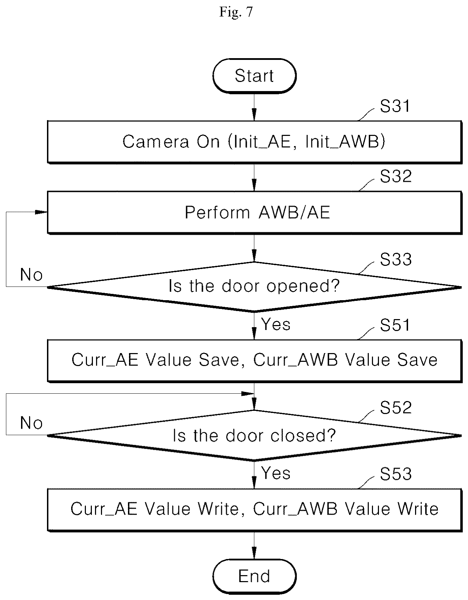

FIG. 7 is a diagram showing a process in which a cooking appliance controls the AE and AWB functions of a camera according to still another embodiment of the present invention. Steps S31 to S33 are the same as described above in FIG. 5.

In the case where the door is opened (S33), the appliance controller 150 saves the AE value (Curr_AE Value) and the AWB value (Curr_AWB Value) immediately before or after the opening of the door (S51).

Afterthat, the appliance controller 150 checks whether the door has been closed (S52). If the door is not closed, the appliance controller 150 continuously monitors whether the door has been closed.

In the case where the door is closed (S52), the appliance controller 150 sets the Curr_AE and Curr_AWB, which have been saved at S51, in the camera 110 (S53). As a result, the camera 110 may perform AE and AWB based on the set Curr_AE and Curr_AWB.

That is, since the camera 110 performs AE/AWB based on the Curr_AE and Curr_AWB at the time when the door was opened, it can quickly reach a state in which it is able to capture the cooking chamber 15.

In a case where, after the AE/AWB of the camera 110 has been set to adjust to external lighting after the opening of the door, the AE/AWB of the camera 110 is performed to adjust to the darkened space after the closing of the door, a delay may occur. However, the camera 110 quickly performs AE/AWB with the use of the AE value (Curr_AE Value) and AWB value (Curr_AWB Value) at the time when the door was opened, so that the camera 110 can quickly capture images in a state suitable to the brightness of the cooking chamber.

Here, depending on the operation of the lighting device immediately before the opening, the appliance controller 150 may save the AE value (Curr_AE Value) and AWB value (Curr_AWB Value) immediately before or after the opening of the door.

For example, it can increase the convergence speed of the camera 110 to apply the AE value (Curr_AE Value) and AWB value (Curr_AWB Value) adjusted appropriately to the lighting device turned on within the cooking chamber, as they are, to the case where the door is closed after having been opened.

Additionally, in the case where there are two or more lighting devices which can be turned on within the cooking chamber, it can increase the convergence speed of the camera 110 to reflect the on/off status of every lighting device at the time of capturing the cooking chamber. For example, by applying the AE value (Curr_AE Value) and AWB value (Curr_AWB Value) corresponding to a state in which the first lighting device is turned on and the second lighting device is turned off before the door is opened, as they are, to the later case where the door is closed after having been opened, it is possible to increase the convergence speed of the camera 110.

According to an embodiment of the present invention, the first lighting device 50a may be disposed in the door 11. In the case where the door is opened, the first lighting device 50a may be turned off, and in the case where the door is closed, the first lighting device 50a may be turned on. The first lighting device 50a provides light so that the camera 110 can capture the inside of the cooking chamber 15, 16.

In this case, the appliance controller 150 saves the AE value and the AWB value which have been set in a state where the first lighting device 50a is turned on. And in the case where the door is closed, the saved AE/AWB values are restored again (S53). Since the state in which the first lighting device 50a is turned on is a state in which the camera 110 can capture the interior, in the case of adjusting in this way, it is possible to increase the convergence speed of the camera 110.

According to another embodiment of the present invention, the first lighting device 50a may be disposed in the door 11, and the second lighting device 50b may be disposed in the lower surface (lower portion) of the cooking chamber 15. In the case where the door 11 is opened, the first lighting device 50a is turned off, and the second lighting device 50b is turned on. In the case where the door 11 is closed, the first lighting device 50a is turned on, and the second lighting device 50b is turned off. The second lighting device 50b provides light when a food ingredient is put into the cooking chamber 15, 16 in a state where the door is opened.

In this case, the appliance controller 150 saves the AE value and the AWB value which have been set in a state where the first lighting device 50a is turned on and the second lighting device 50b is turned off. And in the case where the door is closed, the saved AE/AWB values are restored again (S53). Since the state in which the first lighting device 50a is turned on and the second lighting device 50b is turned off is a state in which the camera 110 can capture the interior, in the case of adjusting in this way, it is possible to increase the convergence speed of the camera 110.

In FIGS. 5 to 7, the Curr_AE and Curr_AWB may be preset values. For example, values preset according to the lighting of the cooking chamber may be saved in the appliance controller 150 or the camera 110, and in the process of the opening and closing of the door, the previously saved values may be set in the camera 110.

Alternatively, the Curr_AE and Curr_AWB may be values immediately before the door is opened or immediately after the door is opened, which are values changing from time to time for the cooking chamber. These values may be saved in the appliance controller 150 or the camera 110, and in the process of the opening and closing of the door, the previously saved values may be set in the camera 110.

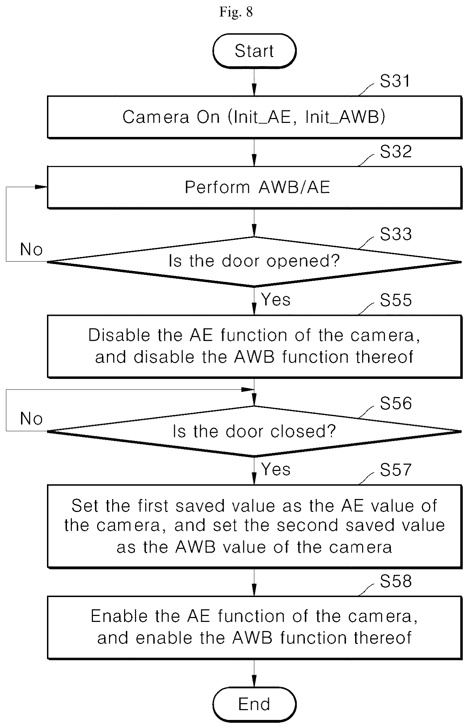

FIG. 8 is a diagram showing a process in which a cooking appliance controls the AE and AWB functions of a camera according to an embodiment of the present invention. Steps S31 to S33 are the same as described above in FIG. 5.

In the case where the door is opened, the appliance controller 150 disables the AE function of the camera 110, and disables the AWB function thereof (S55).

Thereafter, the appliance controller 150 continuously monitors whether the door is closed (S56), and in the case where the door is closed, the appliance controller 150 sets the first saved value as the AE value of the camera 110, and sets the second saved value as the AWB value of the camera 110 (S57). Thereafter, the appliance controller 150 enables the AE function of the camera 110, and enables the AWB function thereof (S58). As a result, the camera 110 performs the AE function based on the first saved value, and performs the AWB function based on the second saved value.

Here, in an embodiment, the first saved value may be any one of an average value of AE values measured within the cooking module 200 by the appliance controller 150, an AE value immediately before or after the opening of the door, and a value saved in the appliance controller 150.

Here, in an embodiment, the second saved value may be any one of an average value of AWB values measured within the cooking module 200 by the appliance controller 150, an AWB value immediately before or after the opening of the door, and a value saved in the appliance controller 150.

Meanwhile, in performing the AE function and AWB function of the camera 110 after the door is closed, it may be possible to reflect whether a food ingredient has been removed, the duration for which the door remains open, or the like.

For example, in the case where the duration for which the door remains open is short, there is little possibility of change in the light environment inside the cooking chamber. Therefore, in this case, the appliance controller 150 may save the AE value and AWB value immediately before or after the opening of the door, and may restore the previously saved AE/AWB values and set them in the camera 110 when the door is closed.

On the other hand, in the case where a long time has elapsed after the door was opened, or a food ingredient has been taken out, there is a high possibility of change in the light environment inside the cooking chamber. Therefore, in this case, the appliance controller 150 may set in the camera 110 other value than the AE value and AWB value immediately before or after the opening of the door.

Here, the "other value" may be an average value of AE values measured within the cooking module or a preset AE value. Additionally, it may be an average value of AWB values measured within the cooking module or a preset AWB value.

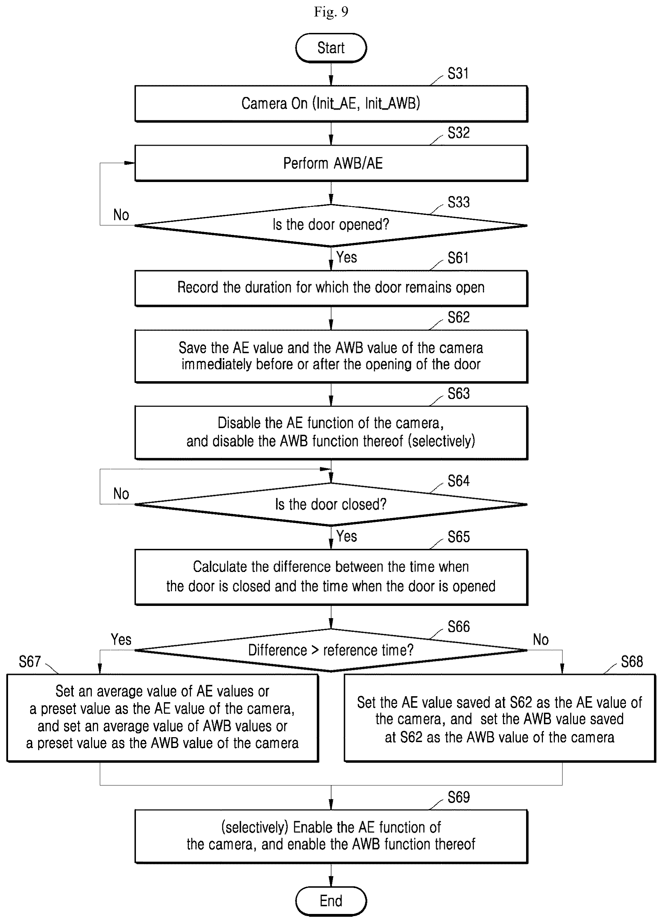

FIG. 9 is a diagram showing a process of controlling camera settings according to the door opening/closing time, according to an embodiment of the present invention. Steps S31 to S33 are the same as described above in FIG. 5.

When the door is opened, the appliance controller 150 records the time when the door is opened (S61). Alternatively, the appliance controller 150 may operate a timer from the time point when the door is opened. And the appliance controller 150 saves the AE value and the AWB value of the camera 110 immediately before or after the opening of the door (S62). And, the appliance controller 150 may selectively disable the AE function and the AWB function of the camera 110 (S63).

The term "selectively" refers to the incorporation of any one of the following embodiments. For example, the appliance controller 150 may disable both the AE function and the AWB function of the camera 110. Alternatively, the appliance controller 150 may disable any one of the AE function and the AWB function of the camera 110. Alternatively, the appliance controller 150 may keep both the AE function and the AWB function of the camera 110 in an enabled state.

Thereafter, in the case where the door is closed (S64), the appliance controller 150 calculates the difference between the time when the door is closed and the time when the door is opened (S65). Alternatively, the appliance controller 150 may stop the timer, and check the elapsed time from the door opening to the door closing.

And the appliance controller 150 checks whether the difference between the door opening time and the door closing time exceeds a reference time (S66). The reference time may correspond to such a short time, for example, 10 seconds or 30 seconds, that there occurs no change in light inside the kitchen, and the reference time may be preset.

If the duration for which the door remains open exceeds the reference time, there is a possibility that there occurs a change in light inside the cooking chamber, and therefore, the appliance controller 150 sets the AE and AWB values with the use of the predetermined values (S67).

For example, the appliance controller 150 sets the previously calculated average value of AE values or a preset value as the AE value of the camera 110 (S67). Additionally, the appliance controller 150 sets the previously calculated average value of AWB values or a preset value as the AWB value of the camera 110 (S67). Since there is a possibility that there occurs a change in light, the appliance controller 150 may control the automatic exposure and automatic white balance functions of the camera by using previously calculated or preset values without using the values saved at S62.

On the other hand, if the duration for which the door remains open is equal to or less than the reference time, there is a low possibility that there occurs a change in light inside the cooking chamber, and therefore, the appliance controller 150 sets the AE and AWB values using the values saved at S62 (S68). That is, the appliance controller 150 sets the AE value saved at S62 as the AE value of the camera, and sets the AWB value saved at S62 as the AWB value of the camera.

After the setting of the AE value and AWB value of the camera, the appliance controller 150 selectively enables the AE function and the AWB function of the camera.

The phrase "selectively enable" means to enable the function or functions that has or have been disabled at S63. For example, in the case where the appliance controller 150 has disabled both the AE function and the AWB function of the camera 110 at S63, the appliance controller 150 enables both the AE function and the AWB function of the camera 110 at S69.

Alternatively, in the case where the appliance controller 150 has disabled any one of the AE function and the AWB function of the camera 110 at S63, the appliance controller 150 enables the function that has been disabled at S69. Alternatively, in the case where the appliance controller 150 has kept both the AE function and the AWB function of the camera 110 in an enabled state at S63, the appliance controller 150 performs no separate enabling operation at S69. This is because the camera 110 has already been continuously keeping the AE function and the AWB function in an enabled state.

The embodiment of FIG. 9 may be summarized as follows.

The appliance controller 150 may save a first saved value, which is an average value of AE values measured within the cooking module 200 or a preset AE value, and a second saved value, which is an average value of AWB values measured within the cooking module 200 or a preset AWB value.

Next, when the door sensor 130 senses the opening of the door, the appliance controller 150 saves the AE value and AWB value of the camera immediately before or after the opening of the door as a third saved value and a fourth saved value, respectively (S62).

Thereafter, when the door sensor 130 senses the closing of the door, the appliance controller 150 sets any one of the first saved value (S67) or the third saved value (S68) as the AE value of the camera, depending on the time from the door opening time to the door closing time (S66). Also, depending on the time from the door opening time to the door closing time (S66), the appliance controller 150 sets any one of the second saved value (S67) or the fourth saved value (S68) as the AWB value of the camera.

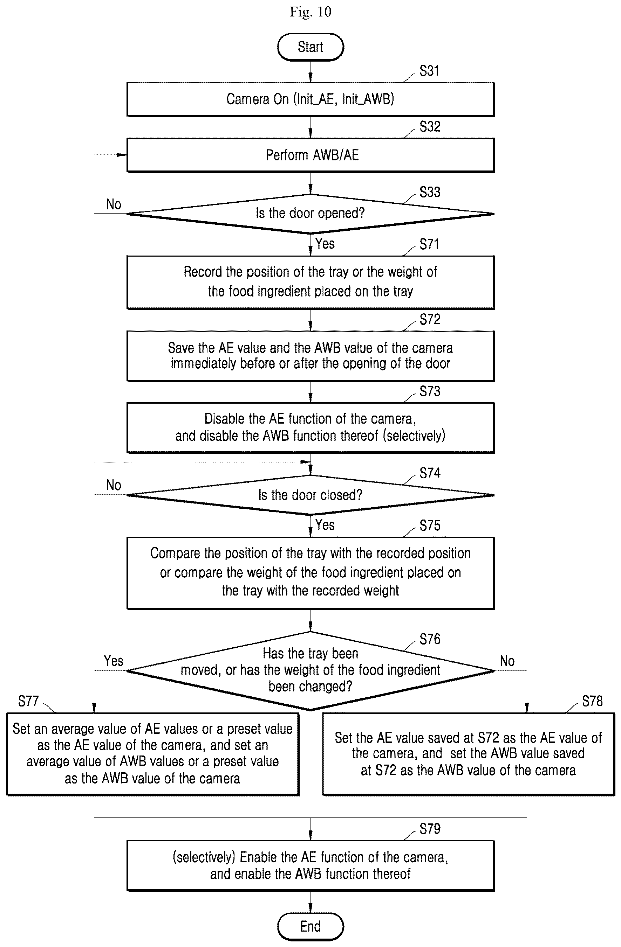

FIG. 10 is a diagram showing a process of controlling camera settings based on whether a tray is moved or not, according to an embodiment of the present invention. Steps S31 to S33 are the same as described above in FIG. 5.

When the door is opened, the appliance controller 150 records the position of the tray or the weight of the food ingredient placed on the tray (S71). And the appliance controller 150 saves the AE value and the AWB value of the camera 110 immediately before or after the opening of the door (S72). And, the appliance controller 150 may selectively disable the AE function and the AWB function of the camera 110 (S73).

The term "selectively" refers to the incorporation of any one of the following embodiments. For example, the appliance controller 150 may disable both the AE function and the AWB function of the camera 110. Alternatively, the appliance controller 150 may disable any one of the AE function and the AWB function of the camera 110. Alternatively, the appliance controller 150 may keep both the AE function and the AWB function of the camera 110 in an enabled state.

Thereafter, in the case where the door is closed (S74), the appliance controller 150 checks whether the tray has been moved or whether the weight of the food ingredient has been changed (S75). The movement of the tray encompasses a case where the tray is taken out, or a case where it is taken out and then inserted back.

And in the case where the appliance controller 150 determines, as a result of the checking at S75, that the tray has been moved or the weight of the food ingredient has been changed, there is a possibility that there occurs a change in light inside the cooking chamber, and therefore, the appliance controller 150 sets the AE and AWB values with the use of the predetermined values.

For example, the appliance controller 150 sets the previously calculated average value of AE values or a preset value as the AE value of the camera 110 (S77). Additionally, the appliance controller 150 sets the previously calculated average value of AWB values or a preset value as the AWB value of the camera 110 (S77).

In the case where the tray has been taken out or the food ingredient has been changed or the weight of food ingredient has been changed, there is a possibility that there occurs a change in light caused by this, the appliance controller 150 may control the automatic exposure and automatic white balance functions of the camera by using previously calculated or preset values without using the values saved at S72.

On the other hand, in the case where the result of the checking at S75 indicates that the tray has not been moved or the weight of the food ingredient has not been changed, there is a low possibility that there occurs a change in light inside the cooking chamber, and therefore, the appliance controller 150 sets the AE and AWB values with the use of the values saved at S72. That is, the appliance controller 150 sets the AE value saved at S72 as the AE value of the camera, and sets the AWB value saved at S72 as the AWB value of the camera (S78).

After the setting of the AE value and AWB value of the camera, the appliance controller 150 selectively enables the AE function and the AWB function of the camera.

The phrase "selectively enable" means to enable the function or functions that has or have been disabled at S73. For example, in the case where the appliance controller 150 has disabled both the AE function and the AWB function of the camera 110 at S73, the appliance controller 150 enables both the AE function and the AWB function of the camera 110 at S79.

Alternatively, in the case where the appliance controller 150 has disabled any one of the AE function and the AWB function of the camera 110 at S73, the appliance controller 150 enables the function that has been disabled at S79. Alternatively, in the case where the appliance controller 150 has kept both the AE function and the AWB function of the camera 110 in an enabled state at S73, the appliance controller 150 performs no separate enabling operation at S79. This is because the camera 110 has already been continuously keeping the AE function and the AWB function in an enabled state.

The embodiment of FIG. 10 may be summarized as follows.

The cooking appliance may further include a tray sensor 140 checking whether or not the tray of the cooking module 200 has been taken out or moved, or checking the weight of the tray.

The appliance controller 150 may save a first saved value, which is an average value of AE values measured within the cooking module 200 or a preset AE value, and a second saved value, which is an average value of AWB values measured within the cooking module 200 or a preset AWB value.

Next, when the door sensor 130 senses the opening of the door, the appliance controller 150 saves the AE value and AWB value of the camera immediately before or after the opening of the door as a third saved value and a fourth saved value, respectively (S72).

Thereafter, when the door sensor 130 senses the closing of the door, the appliance controller 150 sets any one of the first saved value (S77) and the third saved value (S78) as the AE value of the camera, depending on the result of checking whether or not the tray sensor 140 has sensed the taking out of the tray, the movement thereof, or a change in the weight thereof (S76). Also, depending on the result of checking whether or not the tray sensor 140 has sensed the taking out of the tray, the movement thereof, or a change in the weight thereof (S76), the appliance controller 150 sets one of the second saved value (S77) and the fourth saved value (S78) as the AWB value of the camera.

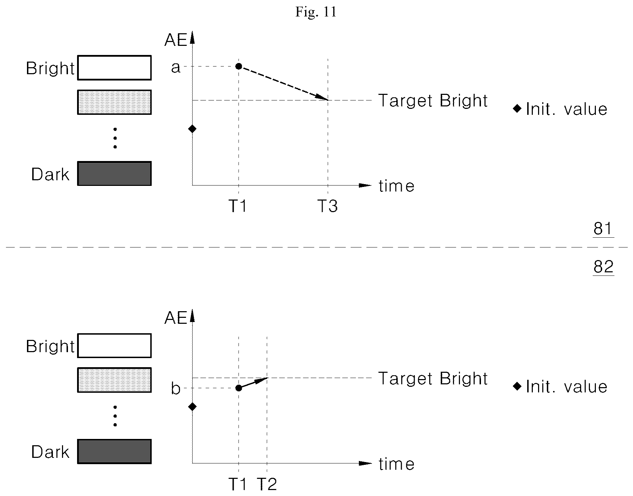

FIG. 11 is a diagram showing the convergence speed to a target value by an automatic exposure function of the camera in a case where an embodiment of the present invention is applied.

Reference numeral 81 denotes a conventional method in which no separate control is performed on the automatic exposure function of the camera, and reference numeral 82 denotes a case where an embodiment of the present invention is applied in which the AE value is controlled during the opening and closing of the door by controlling the automatic exposure function of the camera.

In both 81 and 82, the starting point of the AE value when the camera first operates is indicated as Init.Value. This encompasses the previously discussed Init_AE as an embodiment. Thereafter, when the door is opened, the camera 110 sets the AE value to "a," which is suitable for a very bright state due to external light. Thereafter, when the door is closed (T1), the camera 110 starts from "a" toward the target brightness (Target Bright) by the automatic exposure function. As a result, it is when it reaches the time point T3 that the camera 110 completes the automatic exposure adjustment to be suitable for the brightness of the cooking chamber in the door-closed state.

On the other hand, in the case where an embodiment of the present invention is applied, when the door is opened and then closed (T1), a specific value b is set as the AE value of the camera 110. Accordingly, the camera 110 starts from "b" toward the target brightness (Target Bright) by the automatic exposure function. As a result, when it reaches the time point T2, the camera 110 completes the automatic exposure adjustment to be suitable for the brightness of the cooking chamber in the door-closed state.

As shown in FIG. 11, the camera 110 disposed in the cooking appliance 100 captures the inside of the cooking chamber, so the automatic exposure function is unnecessary for external lighting. Therefore, when the door is opened, the camera 110 can stop the automatic exposure function. Of course, according to another embodiment, the automatic exposure function may not be stopped.

And, when the door is closed, the appliance controller 150 can control the camera 110 to quickly converge to the target brightness within the cooking chamber by setting the specific value b in the camera 110, as shown in 82.

Here, the value b may be an average of the AE values measured within the cooking module by the appliance controller 150. Alternatively, the value b may be the AE value immediately before or immediately after the opening of the door. Alternatively, the value b may be a value previously saved by the appliance controller 150.

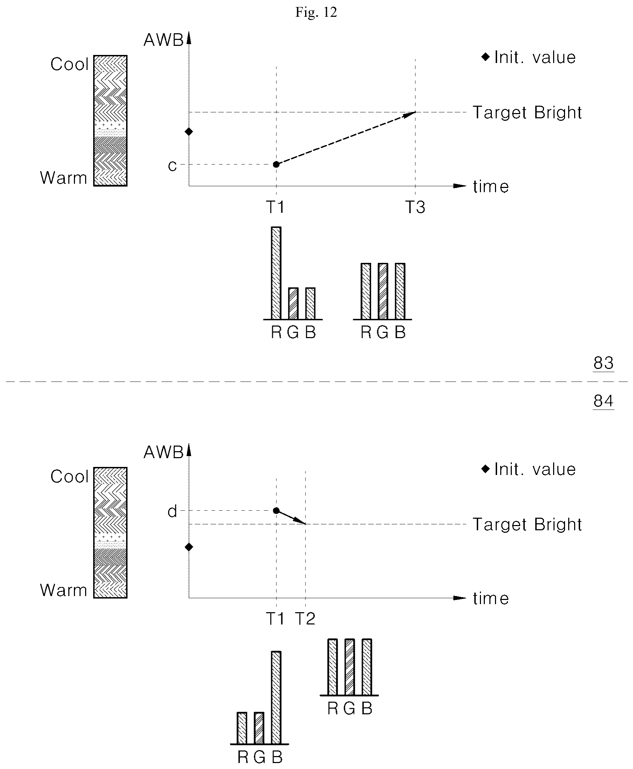

FIG. 12 is a diagram showing the convergence speed to a target value by the automatic white balance function of the camera according to an embodiment of the present invention.

Reference numeral 83 denotes a conventional method in which no separate control is performed on the automatic white balance function of the camera, and reference numeral 84 denotes a case where an embodiment of the present invention is applied in which the AWB value is controlled during the opening and closing of the door by controlling the automatic white balance function of the camera.

In both 83 and 84, the starting point of the AWB value when the camera first operates is indicated as Init.Value. This encompasses the previously discussed Init_AWB as an embodiment. Thereafter, when the door is opened, the camera 110 sets the AWB value to "c," which is suitable for the color of the external lighting (for example, red) due to external light. Thereafter, when the door is closed (T1), the camera 110 starts from "c" toward the target color temperature by the automatic white balance function. As a result, it is when it reaches the time point T3 that the camera 110 completes the automatic white balance to be suitable for the color temperature of the cooking chamber in the door-closed state.

On the other hand, in the case where an embodiment of the present invention is applied, when the door is opened and then closed (T1), a specific value d is set as the AWB value of the camera 110. Consequently, the camera 110 starts from "d" toward the target color temperature by the automatic white balance function. As a result, when it reaches the time point T2, the camera 110 completes the automatic white balance to be suitable for the color temperature of the cooking chamber in the door-closed state.

As shown in FIG. 12, the camera 110 disposed in the cooking appliance 100 captures the inside of the cooking chamber, so the automatic white balance function is unnecessary for external lighting. Therefore, when the door is opened, the camera 110 can stop the automatic white balance function. Of course, according to another embodiment, the automatic white balance function may not be stopped.

And, when the door is closed, the appliance controller 150 can control the camera 110 to quickly converge to the target color temperature within the cooking chamber by setting the specific value d in the camera 110, as shown in 84.

Here, the value d may be an average of the AWB values measured within the cooking module by the appliance controller 150. Alternatively, the value d may be the AWB value immediately before or immediately after the opening of the door. Alternatively, the value d may be a value previously saved by the appliance controller 150.

As discussed in FIGS. 11 and 12, the parameters of the camera 110 can be set to specific values so that the camera 110 can quickly adapt to an abrupt change in light environment caused by the opening and closing of the door. Additionally, such settings can be enabled or disabled through the interface of the user terminal 300 or the cooking appliance 100, allowing the user to obtain the desired image quality or capture speed.

Accordingly, in the case where an embodiment of the present invention is applied, the parameters (AE value and AWB value) necessary for capturing by the camera 110 can be fixed to specific values, allowing images to be obtained independently of the color of the subject for photography, thereby obtaining images similar to learning material. Additionally, in the case where the user terminal 300 requests photo transmission, the fixation of the parameters can be released to obtain natural images.

As an embodiment, when the front door 11 of the cooking appliance 100 is opened, as in FIG. 5, the AE operation is stopped, and the AE value corresponding to the normal state in which the cooking appliance 100 is cooking or the door is closed is written in advance so that it can be applied to the AE operation when the door is closed.

When the front door of the cooking appliance 100 is closed, the appliance controller 150 of the cooking appliance 110 operates AE to be quickly converged to the normal brightness, and writes the normal color temperature value of AWB to be quickly converged.

This function allows the camera's AE/AWB functions to be converged more quickly to the target values even when an abrupt change in lighting occurs after the door is opened and closed, enabling the camera to promptly capture the inside of the cooking chamber. The AE and AWB values to be set in the camera can be variously selected as the AE and AWB values of the camera according to the opening and closing of the door and various variables (such as the duration for which the door remains open, whether the tray is taken out, etc.).

The camera disposed in the door side may experience significant changes in AE/AWB due to external light in the case where the door is opened, and it may take time to reach the target values after the door is closed. In this specification, a technology is presented in which the AE/AWB of the normal state are set in the camera according to the opening and closing of the door, thereby reducing the time required for the values to be changed to the target after the door is closed.

For example, as discussed in FIG. 5, when the door is opened, the AE function is stopped and the AE value can be set in the camera, and when the door is closed, the AE function is enabled and the AWB value of the normal state can be set in the camera. As an embodiment, the AWB may remain in an enabled state, but it may be also changed to a disabled state.

The AE/AWB values of the normal state to be applied to the camera after the closing of the door may be fixed values, or may be the values immediately before the opening and closing of the door. This can be implemented in various ways depending on the time between the door opening and closing, and whether the tray has been taken out.

Although all components constituting the embodiment of the present invention have been described as being combined as one or operated in a state of being combined together, the present invention is not necessarily limited to this embodiment, and within the scope of the present invention's objectives, one or more of all the components may be optionally combined and operated. Also, although all the components may each be implemented as a single independent hardware, some or all of the components may optionally be combined and implemented as a computer program having program modules that perform some or all of the combined functions on one or more hardware. The codes and code segments constituting the computer program may be easily inferred by those skilled in the art to which the present invention pertains. Such a computer program may be stored on a computer-readable storage medium, and be read and executed by a computer, thereby implementing an embodiment of the present invention. The storage medium for the computer program includes storage medium such as magnetic recording medium, optical recording medium, and a semiconductor recording device. Additionally, the computer program implementing an embodiment of the present invention includes a program module that is transmitted in real time through an external device.

The above description has focused on embodiments of the present invention; however, various changes and modifications can be made by those of ordinary skill in the art. Therefore, it should be understood that such changes and modifications are included within the scope of the present invention, as long as they do not depart from the scope of the present invention.

## Claims

1. A cooking appliance (100) cooking a food ingredient, the cooking appliance comprising:
a cooking module (200) heating the food ingredient;
a door (11, 12) opening or closing one side of the cooking module;
a camera (110) disposed in the door and capturing the food ingredient placed in the cooking module (200);
a door sensor (130) sensing the opening or closing of the door (11, 12); and
an appliance controller (150) controlling an auto exposure (AE) value, which is a parameter for setting an automatic exposure of the camera (110), and an auto white balance (AWB) value, which is a parameter for setting an automatic white balance of the camera (110), depending on an open state or close state of the door (11, 12) sensed by the door sensor (130).

2. The cooking appliance (100) according to claim 1, wherein when the door sensor (130) senses the opening of the door, the appliance controller (150) disables an automatic exposure function of the camera (110), and
wherein when the door sensor (130) senses the closing of the door, the appliance controller (150) sets a first saved value as the AE value, and enables the automatic exposure function of the camera (110).

3. The cooking appliance (100) according to claim 2, wherein the first saved value is any one of an average value of AE values measured within the cooking module (200) by the appliance controller (150), an AE value immediately before or after the opening of the door, and a value saved in the appliance controller (150).

4. The cooking appliance (100) according to any one of claims 1 to 3, wherein when the door sensor (130) senses the closing of the door, the appliance controller (150) sets a second saved value as the AWB value.

5. The cooking appliance (100) according to any one of claims 1 to 4, wherein when the door sensor (130) senses the closing of the door, the appliance controller (150) sets a or the first saved value as the AE value, and a or the second saved value as the AWB value.

6. The cooking appliance (100) according to any one of claims 1 to 5, wherein the appliance controller (150) saves a or the first saved value, which is an average value of AE values measured within the cooking module or a preset AE value, and a or the second saved value, which is an average value of AWB values measured within the cooking module or a preset AWB value,
wherein when the door sensor (130) senses the opening of the door, the appliance controller (150) saves the AE value and the AWB value of the camera (110) immediately before or after the opening of the door as a third saved value and a fourth saved value, respectively, and
wherein when the door sensor (130) senses the closing of the door, depending on a period of time from a door opening time to a door closing time, the appliance controller (150) sets any one of the first saved value and the third saved value as the AE value, and sets any one of the second saved value and the fourth saved value as the AWB value.

7. The cooking appliance (100) according to any one of claims 1 to 6, further comprising:
a tray sensor (140) checking whether or not a tray of the cooking module has been taken out or moved, or checking a weight of the tray,
wherein the appliance controller (150) saves a or the first saved value, which is an average value of AE values measured within the cooking module or a preset AE value, and a or the second saved value, which is an average value of AWB values measured within the cooking module or a preset AWB value,
wherein when the door sensor (130) senses the opening of the door, the appliance controller (150) saves the AE value and the AWB value of a camera (110) immediately before or after the opening of a door as a third saved value and a fourth saved value, respectively, and
wherein when the door sensor (130) senses the closing of the door, depending on a result of checking whether or not the tray sensor (140) has sensed the taking out of the tray, the movement thereof, or a change in the weight thereof, the appliance controller (150) sets any one of the first saved value and the third saved value as the AE value, and sets any one of the second saved value and the fourth saved value as the AWB value.

8. A method for controlling a camera (110) setting value depending on an open state of a door, the method comprising:
a step in which a door sensor (130) of a cooking appliance (100) senses an open state or a close state of a door; and
a step in which a appliance controller (150) of the cooking appliance (100) controls an auto exposure (AE) value, which is a parameter for setting an automatic exposure of a camera (110) of the cooking appliance (100), and an auto white balance (AWB) value, which is a parameter for setting an automatic white balance of the camera (110), using a result of the sensing by the door sensor (130).

9. The method for controlling a camera (110) setting value depending on an open state of a door according to claim 8, further comprising:
a step in which, when the door sensor (130) senses the opening of the door, the appliance controller (150) disables an automatic exposure function of the camera (110); and
a step in which, when the door sensor (130) senses the closing of the door, the appliance controller (150) sets a first saved value as the AE value, and enables the automatic exposure function of the camera (110).

10. The method for controlling a camera (110) setting value depending on an open state of a door according to claim 9, wherein the first saved value is any one of an average value of AE values measured within the cooking module by the appliance controller (150), an AE value immediately before or after the opening of the door, and a value saved in the appliance controller (150).

11. The method for controlling a camera (110) setting value depending on an open state of a door according to any one of claims 8 to 10, further comprising:
a step in which, when the door sensor (130) senses the closing of the door, the appliance controller (150) sets a or the second saved value as the AWB value.

12. The method for controlling a camera (110) setting value depending on an open state of a door according to any one of claims 8 to 11, further comprising:
a step in which the appliance controller (150) saves a or the first saved value, which is an average value of AE values measured within the cooking module or a preset AE value, and a or the second saved value, which is an average value of AWB values measured within the cooking module or a preset AWB value;
a step in which, when the door sensor (130) senses the opening of the door, the appliance controller (150) saves the AE value and the AWB value of the camera (110) immediately before or after the opening of the door as a third saved value and a fourth saved value, respectively; and
a step in which, when the door sensor (130) senses the closing of the door, depending on a period of time from a door opening time to a door closing time, the appliance controller (150) sets any one of the first saved value and the third saved value as the AE value, and sets any one of the second saved value and the fourth saved value as the AWB value.

13. The method for controlling a camera (110) setting value depending on an open state of a door according to any one of claims 8 to 12,
wherein the cooking appliance (100) further comprises a tray sensor (140) checking whether or not a tray of the cooking module has been taken out or moved, or checking a weight of the tray,
further comprising:
a step in which the appliance controller (150) saves a or the first saved value, which is an average value of AE values measured within the cooking module or a preset AE value, and a or the second saved value, which is an average value of AWB values measured within the cooking module or a preset AWB value;
a step in which, when the door sensor (130) senses the opening of the door, the appliance controller (150) saves the AE value and the AWB value of the camera (110) immediately before or after the opening of the door as a third saved value and a fourth saved value, respectively; and
a step in which, when the door sensor (130) senses the closing of the door, depending on a result of checking whether or not the tray sensor (140) has sensed the taking out of the tray, the movement thereof, or a change in the weight thereof, the appliance controller (150) sets any one of the first saved value and the third saved value as the AE value, and sets any one of the second saved value and the fourth saved value as the AWB value.

14. The method for controlling a camera (110) setting value depending on an open state of a door according to any one of claims 8 to 13, wherein a first lighting device is disposed in the door, the first lighting device being turned off in a case where the door is opened and being turned on in a case where the door is closed, and
the method further comprising:
a step in which the appliance controller (150) saves the AE value and the AWB value which have been set in a state where the first lighting device is turned on.

15. The method for controlling a camera (110) setting value depending on an open state of a door according to any one of claims 8 to 14, wherein a first lighting device is disposed in the door, and a second lighting device is disposed in a lower surface of a cooking chamber opened or closed by the door,
wherein in a case where the door is opened, the first lighting device is turned off and the second lighting device is turned on, and in a case where the door is closed, the first lighting device is turned on and the second lighting device is turned off, and
the method further comprising:
a step in which the appliance controller (150) saves the AE value and the AWB value which have been set in a state where the first lighting device is turned on and the second lighting device is turned off.
